# EUROPEAN PATENT APPLICATION

(11) **EP 4 596 237 A1**
(43) Date of publication of application: **06.08.2025**
(21) Application number: 23882586.3
(22) Date of filing: 23.10.2023
(51) Int. Cl.: B32B 27/00, B32B 27/40, B65D 65/40

(54) **METHOD FOR PRODUCING LAMINATE FOR PACKAGING MATERIALS, AND LAMINATE FOR PACKAGING MATERIALS**

(30) Priority: 28.10.2022 JP 2022173548
(71) Applicant: Toppan Holdings Inc., Tokyo 110-0016 (JP)
(72) Inventor: NISHIKAWA, Takeshi, Tokyo 110-0016 (JP); MASUKO, Tatsuya, Tokyo 110-0016 (JP); YOSHIHARA, Toshiaki, Tokyo 110-0016 (JP)
(74) Representative: Hasegawa, Kan
(86) International application number: PCT/JP2023/038195
(87) International publication number: WO 2024/090381

(57) **Abstract**

A method for producing a laminate for packaging materials, the method including: a laminating step of bonding a first resin film and a second resin film to each other with an isocyanate-curable solvent-free adhesive to obtain a stack; and a curing step of curing the stack at 25 to 80°C, in which a carbon dioxide permeability of at least one of the first resin film and the second resin film is 200 cc/m²·day·atm or more.

## Description

### Technical Field

The present invention relates to a method for producing a laminate for packaging materials and a laminate for packaging materials.

### Background Art

An ink for lamination containing at least a polyurethane resin, a colorant, and a solvent for bonding a resin film or the like used for a packaging material is known (Patent Literature 1). Such an ink is a so-called solvent-based adhesive.

### Citation List

### Patent Literature

Patent Literature 1: Japanese Unexamined Patent Publication No. 2010-126562

### Summary of Invention

### Technical Problem

In recent years, from the viewpoint of environmental consideration, attempts have been made to use a solvent-free adhesive instead of the solvent-based adhesive as described above, and as such an adhesive, an isocyanate-curable adhesive excellent in high-speed productivity has attracted attention. However, in the isocyanate-curable solvent-free adhesive, there is a concern that carbon dioxide is generated at the time of curing, and in addition, air may be entrained at the time of coating the resin film. These carbon dioxide and entrainment air cause poor appearance of the laminate to be produced.

The present invention has been made in view of the above circumstances, and an object thereof is to provide a method for producing a laminate for packaging materials having a favorable appearance using an isocyanate-curable solvent-free adhesive.

Furthermore, an object of the present invention is to provide a laminate for packaging materials having a favorable appearance, which is obtained by the producing method.

### Solution to Problem

One aspect of the present invention provides a method for producing a laminate for packaging materials, the method including: a laminating step of bonding a first resin film and a second resin film to each other with an isocyanate-curable solvent-free adhesive to obtain a stack; and a curing step of curing the stack at 25 to 80°C, in which a carbon dioxide permeability of at least one of the first resin film and the second resin film is 200 cc/m²·day·atm or more.

In one embodiment, the curing step may be performed at 50°C or lower for 1 hour or more.

In one embodiment, a viscosity of the solvent-free adhesive may be 100 mPa·s or more at 40°C.

One aspect of the present invention provides a laminate for packaging materials obtained by laminating a first resin film and a second resin film with a cured product of an isocyanate-curable solvent-free adhesive interposed therebetween, in which a carbon dioxide permeability of at least one of the first resin film and the second resin film is 200 cc/m²·day·atm or more.

### Advantageous Effects of Invention

According to the present invention, there is provided a method for producing a laminate for packaging materials having a favorable appearance using an isocyanate-curable solvent-free adhesive.

Furthermore, according to the present invention, there is provided a laminate for packaging materials having a favorable appearance, which is obtained by the producing method.

### Brief Description of Drawings

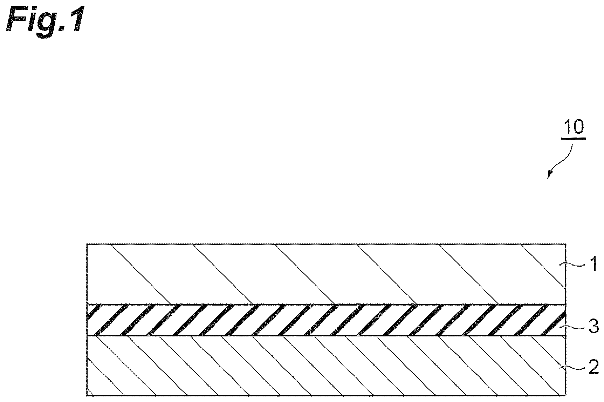

FIG. 1 is a schematic cross-sectional view of a laminate for packaging materials according to an embodiment of the present invention.

### Description of Embodiments

Hereinafter, preferred embodiments of the present disclosure will be described in detail. However, the present disclosure is not limited to the following embodiments.

### <Method for Producing Laminate for Packaging Materials>

A method for producing a laminate for packaging materials includes a laminating step of bonding a first resin film and a second resin film to each other with an isocyanate-curable solvent-free adhesive to obtain a stack, and a curing step of curing the stack at 25 to 80°C.

### (Laminating Step)

In the laminating step, first, a solvent-free adhesive is applied to one surface of the first resin film or the second resin film. Thereafter, a coating surface of the solvent-free adhesive of one resin film is opposed to other resin film to which the adhesive has not been applied, and the resin films are bonded to each other.

The laminating step can be performed using a processing device including a feeding roll and a winding roll, and specifically, can be performed using a forward transfer type coating device or a reverse transfer type coating device (reverse coater). For example, when the case of applying the solvent-free adhesive to the first resin film is described, the first resin film is fed from a feeding roll, and the adhesive is applied to one surface of the first resin film using a roll coater or the like. Then, a coating surface of the adhesive of the first resin film is bonded to one surface of the second resin film fed from another feeding roll. A stack in which the resin films are bonded to each other in this manner is wound up by the winding roll.

The processing speed by the processing device can be set to 50 m/min or more from the viewpoint of productivity, and may be 100 m/min or more. In the case of using a solvent-free adhesive, the entrainment of air is more likely to occur when the processing speed is increased, but in the present producing method in which the carbon dioxide permeability of the resin film is adjusted, the entrainment air can be suitably released. Therefore, even when the processing speed is increased to some extent, it is easy to obtain a laminate having a favorable appearance. The upper limit of the processing speed is not particularly limited, but can be set to 500 m/min or less from the viewpoint of processing stability.

A temperature of the adhesive at the time of coating can be set to 35°C or higher from the viewpoint of reducing the viscosity, and may be 40°C or higher. The upper limit of the temperature is not particularly limited, but can be set to 100°C or lower from the viewpoint of pot life, and may be 90°C or lower or 85°C or lower.

In the solvent-free adhesive that does not use a solvent, the viscosity thereof is increased to some extent. A viscosity of the adhesive at the time of coating can be 100 mPa·s or more, 200 mPa·s or more, 300 mPa·s or more, or 500 mPa·s or more at 40°C. The upper limit of the viscosity is not particularly limited, and is preferably 1200 mPa·s or less and more preferably 1000 mPa·s or less from the viewpoint of coating suitability.

A coating amount of the adhesive can be set to 0.5 to 5 g/m² from the viewpoint of adhesive strength, and may be 1 to 5 g/m² or 1.5 to 4.5 g/m².

### (Curing Step)

In the curing step, the stack obtained in the laminating step is cured (left) under an environment of 25 to 80°C. The curing step can also be referred to as an aging step. A curing temperature may be appropriately adjusted according to the component of the adhesive. In this step, curing of the solvent-free adhesive proceeds, and a laminate in which the first resin film and the second resin film are laminated with a cured product of an isocyanate-curable solvent-free adhesive interposed therebetween can be obtained.

In the present producing method, since an isocyanate-curable adhesive is used, carbon dioxide is generated at the time of curing the adhesive, and since the adhesive is a solvent-free type, the viscosity is high and air is easily entrained at the time of applying the adhesive. However, since a resin film having excellent carbon dioxide permeability is used for at least one of the resin films to be laminated, these carbon dioxide and entrainment air can be suitably released to the outside of the laminate.

From the viewpoint of more suitably releasing these carbon dioxide and entrainment air to the outside of the laminate, the upper limit of the curing temperature is 80°C or lower, and may be 50°C or lower or 40°C or lower. Furthermore, a curing time can be set to 1 hour or more, and may be 12 hours or more, or 24 hours or more. The upper limit of the curing time is not particularly limited, and can be set to, for example, about 72 to 192 hours from the viewpoint of the production efficiency of the laminate.

When the laminate for packaging materials further includes a third resin film, the third resin film may be laminated on the surface on the first resin film side or the surface on the second resin film side of the stack of the first resin film and the second resin film with an adhesive interposed therebetween in the same manner as described above. The third resin film may be laminated before or after curing of the stack of the first resin film and the second resin film. When the third resin film is laminated, the same solvent-free adhesive as described above may be used depending on the carbon dioxide permeability, but other adhesives used in the field of laminates for packaging materials may be used. For example, as long as the third resin film has sufficient carbon dioxide permeability, carbon dioxide and entrainment air can be suitably released from the third resin film side to the outside of the laminate even when the same solvent-free adhesive as described above is used.

### (Solvent-Free Adhesive)

Examples of the isocyanate-curable solvent-free adhesive include an adhesive containing a polyisocyanate component and a polyol component and containing no organic solvent or water. Since the polyisocyanate component and the polyol component are each prepared in an appropriate amount in advance and then mixed at the time of use, the solvent-free adhesive can be referred to as a two-liquid curable solvent-free adhesive. The isocyanate-curable solvent-free adhesive may be a solvent-free urethane-based adhesive.

The polyisocyanate component can include diphenylmethane diisocyanate. The polyisocyanate component may further include an isocyanate group-terminated prepolymer which is a reaction product of the isocyanate and the polyol.

Examples of the diphenylmethane diisocyanate include 4,4'-diphenylmethane diisocyanate, 2,4'-diphenylmethane diisocyanate, and 2,2'-diphenylmethane diisocyanate. These isocyanates can be used alone or in combination of two or more kinds thereof.

The polyol component can include, for example, a low-molecular-weight polyol or a high-molecular-weight polyol.

Examples of the low-molecular-weight polyol include polyols having two or more hydroxy groups in the molecule and having a number average molecular weight of 50 to 300.

Examples of the low-molecular-weight polyol include divalent alcohols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylolheptane, alkane (C7 to 20) diol, 1,3- or 1,4-cyclohexanedimethanol and mixtures thereof, 1,3- or 1,4-cyclohexanediol and mixtures thereof, hydrogenated bisphenol A, 1,4-dihydroxy-2-butene, 2,6-dimethyl-1-octene-3,8-diol, bisphenol A, diethylene glycol, triethylene glycol, and dipropylene glycol, trivalent alcohols such as glycerin, trimethylolpropane, and triisopropanolamine, tetravalent alcohols such as tetramethylolmethane (pentaerythritol) and diglycerin, pentavalent alcohols such as xylitol, hexavalent alcohols such as sorbitol, mannitol, aritol, iditol, dalcitol, altritol, inositol, and dipentaerythritol, heptavalent alcohols such as perseitol, and octavalent alcohols such as sucrose. These polyols can be used alone or in combination of two or more kinds thereof.

Examples of the high-molecular-weight polyol include polyols having two or more hydroxy groups in the molecule and having a number average molecular weight of more than 300.

Examples of the high-molecular-weight polyol include polyether polyol, polyester polyol, polycarbonate polyol, polyurethane polyol, epoxy polyol, vegetable oil polyol, polyolefin polyol, acrylic polyol, and vinyl monomer-modified polyol. These polyols can be used alone or in combination of two or more kinds thereof.

The solvent-free adhesive may contain other components which are other than the polyisocyanate component and the polyol component. Examples of the other components include phosphoric acid, a silane coupling agent, an antifoaming agent, an epoxy resin, a catalyst, a coatability improver, a leveling agent, a stabilizer, a plasticizer, a surfactant, a pigment, a filler, organic or inorganic fine particles, and an antifungal agent.

From the viewpoint of improving adhesiveness, a blending ratio of the polyisocyanate component and the polyol component can be set to, for example, 0.5 to 5 as an equivalent ratio of isocyanate groups of the polyisocyanate component to hydroxy groups of the polyol component (molar ratio of NCO groups/OH groups).

The blending ratio of the polyisocyanate component and the polyol component can be set to, for example, 30 to 100 parts by mass of the polyol component with respect to 100 parts by mass of the polyisocyanate component.

### (Resin Film)

A resin film used for the first resin film and the second resin film is not particularly limited as long as it has a desired carbon dioxide permeability. Examples of such a resin film include cellophane, a polyamide-based resin film, a polyester-based resin film, an olefin-based resin film, an acid-modified polyolefin-based resin film, a polystyrene-based resin film, a polyurethane-based resin film, and an acetal-based resin film. Specific examples of the resin film include resin films composed of polyethylene (low density, medium density, high density, or linear low density polyethylene), polypropylene, polybutene, polyvinyl alcohol, ethylene-vinyl acetate copolymer, ionomer, ethylene-(meth)acrylic acid copolymer, ethylene-(meth)acrylic acid ester copolymer, ethylene-propylene copolymer, methylpentene, polyacrylonitrile, acrylonitrile-styrene copolymer, acrylonitrile-butadiene-styrene copolymer, polycarbonate, polyvinyl chloride (PVC), polyvinylidene chloride (PVDC), polyvinylidene fluoride (PVDF), ethylene-tetrafluoroethylene copolymer (ETFE), polytetrafluoroethylene (PTFE), polyethylene terephthalate (PET), polybutylene terephthalate, polyethylene naphthalate and the like, K-coated films, and composite films obtained by laminating two or more of these.

The resin film may be obtained by an extrusion method, a cast molding method, a T-die method, a cutting method, an inflation method, or the like using one or two or more kinds of resins, or may be obtained by multi-layer co-extrusion using two or more kinds of resins.

Furthermore, the resin film may be a uniaxially or biaxially stretched film.

A thickness of the resin film is not particularly limited, and can be set to 1 to 300 µm from the viewpoint of moldability, transparency, carbon dioxide permeability, and the like.

A carbon dioxide (carbon dioxide gas) permeability of at least one of the first resin film and the second resin film is 200cc/m²·day·atm or more. As a result, carbon dioxide generated at the time of curing the adhesive and air entrained at the time of applying the adhesive can be suitably released to the outside of the laminate. Thus, a laminate having a favorable appearance can be obtained. Note that, from the findings of the inventors, it has been found that when the carbon dioxide permeability of the resin film is as described above, the entrained air can also be suitably released.

From the viewpoint of more suitably releasing these carbon dioxide and entrainment air to the outside of the laminate, the carbon dioxide permeability may be 250 cc/m²·day·atm or more, or 300 cc/m²·day·atm or more. The upper limit of the carbon dioxide permeability is not particularly limited, and can be set to 20000 cc/m²·day·atm from the viewpoint of film formability of the film. The carbon dioxide permeability can be measured at 23°C and 0% RH by a differential pressure method in accordance with JIS K 7126 A using a differential pressure type gas permeability measuring apparatus.

The resin film may be provided with a transparent vapor deposition layer such as a silica vapor deposition layer or an alumina vapor deposition layer, an aluminum vapor deposition layer, and the like. Furthermore, a primer coating agent layer, an undercoat layer, an anchor coating layer, a barrier coating layer, and the like may be formed on the resin film.

The resin film may be subjected to a physical treatment such as a corona discharge treatment, an ozone treatment, a low-temperature plasma treatment using oxygen gas, nitrogen gas, or the like, or a glow discharge treatment, or a chemical treatment such as an oxidation treatment using a chemical agent in order to improve adhesion with an adhesive or other layers such as a vapor deposition layer.

### <Laminate for Packaging Materials>

FIG. 1 is a schematic cross-sectional view of a laminate for packaging materials according to an embodiment of the present invention. A laminate for packaging materials can be produced by the above-described method for producing a laminate for packaging materials. That is, a laminate 10 for packaging materials is formed by laminating a first resin film 1 and a second resin film 2 with an adhesive layer (a cured product of an isocyanate-curable solvent-free adhesive) 3 interposed therebetween. A carbon dioxide permeability of at least one of the first resin film and the second resin film included in the laminate for packaging materials is 200cc/m²·day·atm or more.

In the method for producing a laminate for packaging materials, carbon dioxide generated at the time of curing the solvent-free adhesive and air entrained at the time of applying the adhesive can be suitably released to the outside of the laminate, so that a laminate for packaging materials to be obtained can have an extremely favorable appearance. Examples

The present invention will be described in more detail with reference to the following Examples, but the present invention is not limited to these Examples.

### <Preparation of Various Films>

Resin films shown in Table 1 were prepared. In the table, printing GL represents a GL film coated with white ink (ink obtained by dispersing titanium oxide in a urethane binder: thickness of 2 µm), VMCPP represents aluminum-deposited CPP, LL represents low-density polyethylene (LLDPE), and VMPET represents aluminum-deposited PET.

The carbon dioxide permeability of each resin film was measured at 23°C and 0% RH in accordance with JIS K 7126 A using a differential pressure type gas permeability measuring apparatus.

**[Table 1]**

| | Name | Thickness (µm) | Carbon dioxide permeability (cc/m²·day·atm) |
|---|---|---|---|
| ONy | ONMB-RT (manufactured by UNITIKA LTD) | 15 | 296.2 |
| GL | GL-ARH (manufactured by TOPPAN Inc) | 12 | 0.354 |
| Printing GL | GL-ARH/white ink (manufactured by TOPPAN Inc) | 14 | 0.789 |
| VMCPP | 2703 (manufactured by TORAY INDUSTRIES, INC.) | 20 | 126.3 |
| CPP | ZK207 (manufactured by TORAY ADVANCED FILM Co., Ltd) | 60 | 8936 |
| LL (1) | TUX-MC-S (manufactured by Mitsui Chemicals Tohcello, Inc) | 60 | 14870 |
| OPP | U-1 (manufactured by Mitsui Chemicals Tohcello, Inc) | 20 | 7193 |
| PET | E5102 (manufactured by TOYOBO CO., LTD.) | 12 | 784.7 |
| VMPET | 1310 (manufactured by TORAY INDUSTRIES, INC.) | 12 | 6.2 |
| LL (2) | SE620 (manufactured by TAMAPOLY CO., LTD.) | 100 | 7800 |

### <Preparation of Solvent-Free Adhesive>

Isocyanate-curable solvent-free adhesive A: "LA6172/LA7772" (manufactured by Henkel AG & Co. KGaA, viscosity at a liquid temperature of 40°C: 800 mPa·s)

Isocyanate-curable solvent-free adhesive B: "A248B/A246A" (manufactured by Mitsui Chemicals, Inc., viscosity at a liquid temperature of 40°C: 1150 mPa·s)

### <Production of Laminate for Packaging Materials>

### (Example 1)

"ONMB-RT", which is an ONy film, was used as a first film, a GL film "GL-ARH", which is a transparent vapor deposition barrier film, was used as a second film, and these films were laminated (bonded) at a processing speed of 100 m/min using a laminating apparatus. The barrier layer side of the second film was opposed to the first film. For lamination, an isocyanate-curable solvent-free adhesive A heated to 40°C was used. The solvent-free adhesive was applied by a roll coater included in the laminating apparatus so that the coating amount was 2 g/m². After the first film and the second film were bonded to each other, curing was performed at 40°C for 3 days as a roll. Thus, a laminate for packaging materials was obtained.

### (Example 4)

"GL-ARH", which is a transparent vapor deposition barrier film, was used as a first film, "ONMB-RT", which is an ONy film, was used as a second film, and "ZK207", which is a CPP sealant film, was used as a third film, and these films were laminated (bonded) in this order at a processing speed of 100 m/min using a laminating apparatus. The barrier layer side of the first film was opposed to the second film. For lamination, an isocyanate-curable solvent-free adhesive A heated to 40°C was used. The solvent-free adhesive was applied by a roll coater included in the laminating apparatus so that the coating amount was 2 g/m². After the first to third films were bonded to each other, curing was performed at 40°C for 3 days as a roll. Thus, a laminate for packaging materials was obtained.

### (Other Examples and Comparative Examples)

A laminate for packaging materials was obtained in the same manner as in Example 1 or 4 except that the layer configuration, the adhesive type, and the processing speed were changed as shown in Table 2. For the printing GL, the white ink coated surface was bonded as the adhesive coated surface. The film underlined in the column of layer configuration in Table 2 is a film having a carbon dioxide permeability of 200 cc/m²·day·atm or more.

### <Appearance Inspection>

The appearance of the laminate for packaging materials obtained in each example was observed with a microscope or visually. The evaluation results are shown in Table 2.
A: Appearance was favorable in microscopic and visual observation.
B: Appearance was favorable in visual observation.
C: A large number of air bubbles were observed in the laminate by visual observation, and the appearance was poor.

**[Table 2]**

| | Layer configuration | Adhesive | Processing speed | Appearance |
|---|---|---|---|---|
| Example 1 | ONy/GL | A | 100 m/min | B |
| Example 2 | PET/GL | B | 150 m/min | A |
| Example 3 | GL/CPP | A | 150 m/min | A |
| Example 4 | GL/ONy/CPP | A | 100 m/min | B |
| Example 5 | OPP/GL/CPP | A | 100 m/min | B |
| Example 6 | GL/LL (1) | B | 150 m/min | A |
| Example 7 | Printing GL/CPP | A | 100 m/min | B |
| Example 8 | ONy/VMPET/LL (2) | B | 100 m/min | B |
| Comparative Example 1 | GL/VMCPP | B | 150 m/min | c |
| Comparative Example 2 | GL/GL | A | 50 m/min | c |

### Reference Signs List

- 1: first resin film
- 2: second resin film
- 3: adhesive layer
- 10: laminate for packaging materials

## Claims

1. A method for producing a laminate for packaging materials, the method comprising:
a laminating step of bonding a first resin film and a second resin film to each other with an isocyanate-curable solvent-free adhesive to obtain a stack; and
a curing step of curing the stack at 25 to 80°C, wherein
a carbon dioxide permeability of at least one of the first resin film and the second resin film is 200 cc/m²·day·atm or more.

2. The producing method according to claim 1, wherein the curing step is performed at 50°C or lower for 1 hour or more.

3. The producing method according to claim 1 or 2, wherein a viscosity of the solvent-free adhesive is 100 mPa·s or more at 40°C.

4. A laminate for packaging materials obtained by laminating a first resin film and a second resin film with a cured product of an isocyanate-curable solvent-free adhesive interposed therebetween, wherein
a carbon dioxide permeability of at least one of the first resin film and the second resin film is 200 cc/m²·day·atm or more.
